# EUROPÄISCHE PATENTSCHRIFT

(11) **EP 2 180 215 B1**
(45) Veröffentlichungstag und Bekanntmachung des Hinweises auf die Patenterteilung: **18.05.2016**
(21) Anmeldenummer: 08018666.1
(22) Anmeldetag: 24.10.2008
(51) Int. Cl.: F16J 15/32

(54) **Ringförmige Abdichtungsvorrichtung für drehbare Spindeln oder andere Welle-Lager-Systeme**
Ring-shaped sealing device for turnable spindles or other shaft-bearing systems
Dispositif d'étanchéité annulaire pour broches rotatives ou autres systèmes arbre-moyeu

(43) Veröffentlichungstag der Anmeldung: 28.04.2010
(73) Patentinhaber: Siemens Aktiengesellschaft, 80333 München (DE)
(72) Erfinder: Gebert, Karl, Dr., 97424 Schweinfurt (DE); Gebert, Kurt, 91541 Rothenburg (DE)

(56) Entgegenhaltungen:
- FR-A- 569 191
- GB-A- 1 080 175

## Beschreibung

Ringförmige Abdichtungsvorrichtung für drehbare Spindeln oder andere Welle-Lager-Systeme

Die Erfindung betrifft eine ringförmige Abdichtungsvorrichtung für drehbare Spindeln oder andere Welle-Lager-Systeme.

Welle-Lager-Systeme und insbesondere schnelldrehende Spindelsysteme werden aufgrund der hohen Drehzahlen bzw. Umfangsgeschwindigkeiten von ca. 100 Metern pro Sekunde und mehr mit sogenannten Labyrinthdichtungen mit Sperrluftunterstützung ausgeführt. Diese Labyrinthdichtungen sind jedoch nicht in der Lage, diese Spindelsysteme bei allen auftretenden Betriebsbedingungen zuverlässig abzudichten.

Dabei können beispielsweise bei hohem Kühlschmiermitteldruck am Dichtspalt Flüssigkeiten in den Antriebsraum eindringen. Ebenso kann ein zeitweiser Ausfall der Sperrluftunterstützung eintreten, was ebenfalls zum Eindringen von Flüssigkeiten in den Antriebsraum führt. Außerdem ist die eingesetzte Sperrluft bei fehlender Wartung des Wasserabscheiders nicht vollkommen trocken. Dies führt im Lagerbereich zu Lagerschäden.

Außerdem kann nach dem Stillsitzen z.B. der Spindel und dem Abschalten der Sperrluftunterstützung aufgrund thermischer Effekte feuchte Luft aus dem Arbeitsraum der Spindel ins Innere des Spindelsystems gesaugt werden.

Zuverlässige Labyrinthdichtungen mit Sperrluftunterstützung weisen vergleichsweise eine relativ große axiale Baulänge auf und beeinträchtigen dadurch die dynamischen Eigenschaften der Antriebssysteme, insbesondere einer Spindel.

Eine weitgehend sichere Abdichtung von Spindeln sowie Welle-Lager-Systemen ist durch den Einsatz von berührenden Dichtungen vergleichsweise zunächst zuverlässig. Diese sind jedoch aufgrund der auftretenden Reibungseffekte an der Dichtlippe und der entstehenden hohen Temperaturen durch die Reibung nur bis zur Umfangsgeschwindigkeit von ca. 40 Metern pro Sekunde geeignet. Bei höheren Umfangsgeschwindigkeiten verbrennen oder verschmelzen diese Dichtlippen. Eine zuverlässige Abdichtung ist dann nicht mehr gewährleistet.

Umfangsgeschwindigkeiten von bis zu über 100 Metern pro Sekunde, wie sie auch bei Flugzeugtriebwerken auftreten können, werden durch Bürstendichtungen abgedichtet. Diese sind jedoch sehr aufwändig herzustellen und sehr teuer in der Anschaffung.

In der Druckschrift DE 31 19 255 A1 ist eine Bürstendichtung beschrieben, die elastische Borsten zwischen zwei Ringelementen zeigt.

Ebenso ist es äußerst aufwändig, mehrstufige Dichtungen mit minimalen hydrodynamischen Spalten herzustellen um die negativen Effekte bei sich berührenden Dichtungen zu vermeiden.

Aus der Druckschrift US 3 801 114 ist ein Radialwellendichtring mit drei Einzeldichtscheiben in einer Metallfassung bekannt. Durch Ausbildung eines hydrodynamischen Effekts wird versucht, eine verbesserte Dichtwirkung dabei zu erreichen.

Aus der Druckschrift US 4 042 248 ist eine Dichtung mit mehreren Einzeldichtscheiben bekannt, wobei ein Schmiermittel zwischen den einzelnen Dichtscheiben gespeichert ist und den Reibstellen zur Verfügung gestellt werden soll. Bei Betrieb ohne Schmiermittel ist die anfallende Reibwärme abzuführen, was aber insbesondere bei hohen Drehzahlen zu Verschmelzung der Dichtscheiben führen kann.

Aus der Druckschrift US 6 196 550 ist eine Dichtung mit kammartig ausgeprägten Dichtscheiben bekannt, die versetzt angeordnet sind und zwischen Endscheiben und Abstandshaltern angeordnet sind.

Ausgehend von den oben genannten, prinzipiellen Nachteilen liegt der Erfindung die Aufgabe zugrunde, eine Abdichtungsvorrichtung für Spindeln und Welle-Lager-Systeme auch hoher Umfangsgeschwindigkeiten von über 100 Metern pro Sekunde auf axial engem Raum zu schaffen. Des Weiteren sollen die Abdichtungsvorrichtungen kostengünstig herstellbar sein.

Die Lösung der gestellten Aufgabe gelingt durch eine ringförmige Abdichtungsvorrichtung für drehbare Spindeln oder andere Welle-Lager-Systeme, wobei die Abdichtungsvorrichtung eine vorgebbare axiale Schichtung von Kunststofffolien und Metallfolien aufweist, wobei die Kunststofffolien und Metallfolien bezüglich einer Welle radial angeordnet sind, wobei die Metallfolien im Bereich der Welle bezüglich der Kunststofffolien radial zurückgesetzt sind und so ein Kammersystem erzeugen und wobei die axiale Schichtung in einer Fassung gehalten ist.

Unter Spindeln oder Spindelsystemen sind dabei Anwendungen im Maschinenbau umfasst, die beispielsweise bei Werkzeugmaschinen die Hauptarbeitswelle bilden, die das Werkzeug oder das Werkstück drehen (Arbeits- oder Hauptspindel). Einsatzgebiete derartiger Spindeln sind u.a. Dreh-, Fräs-, oder Schleifmaschinen.

Durch die Schichtung von insbesondere hochtemperaturbeständigen, reibungsarmen Kunststofffolien und Metallfolien bzw. Metallscheiben lassen sich kostengünstige Dichtungen für sehr hohe Umfangsgeschwindigkeiten (größer 100 Meter pro Sekunde) realisieren. Die Kunststofffolien berühren dabei zumindest zu Beginn ihres Betriebs die sich drehende Welle und schleifen sich ein. Die erzeugte Reibungswärme wird durch die Metallfolien bzw. Metallscheiben aus der Kontaktzone abgeleitet. Die Metallfolien bzw. Metallscheiben berühren dabei die Welle nicht, da sie bzgl. der Welle radial zurückgesetzt sind. Eine Überhitzung in diesem Bereich ist dadurch vermieden.

Durch den mehrstufigen schichtartigen Aufbau der Dichtung werden Kammersysteme hergestellt, die die Dichtwirkung weiter verbessern und durch deren hydrodynamischen Effekte das Durchströmen von Flüssigkeiten und Gasen zusätzlich unterbinden.

In einer weiteren Ausführungsform wird die Dichtung unter Druckluft gesetzt und dadurch die Dichtwirkung und die Kühlung der Abdichtungsvorrichtung weiter unterstützt. In einer vorteilhaften Ausgestaltung sind die Metallfolien bzw. Metallscheiben als gut wärmeleitendes Kupfer ausgeführt.

Ein besonders kompakter Aufbau lässt sich dadurch erreichen, dass eine L-förmige Fassung die Schichtung der Metall- und Kunststofffolien aufnimmt und durch einen Deckel und durch am Umfang verteilte Schrauben fixiert ist. Dabei ragen die Schraubenschäfte durch Durchgangslöcher der Schichtung und die Schrauben greifen in Gewinde der Fassung ein.

Ein besonders axial kompakter Aufbau wird dadurch erreicht, dass die Schrauben als Senkkopfschrauben ausgeführt sind und somit in den Deckel eingesenkt sind.

Die Erfindung sowie weitere vorteilhafte Ausgestaltungen der Erfindung werden anhand eines ausgeführten Beispiels gemäß der Zeichnung näher erläutert. Darin zeigen:
- FIG 1: einen Längsschnitt einer Abdichtungsvorrichtung,
- FIG 2: eine Detaildarstellung der Fixierung,
- FIG 3: die erfindungsgemäße Dichtungsanordnung,
- FIG 4: eine perspektivische Darstellung der Abdichtungsvorrichtung.

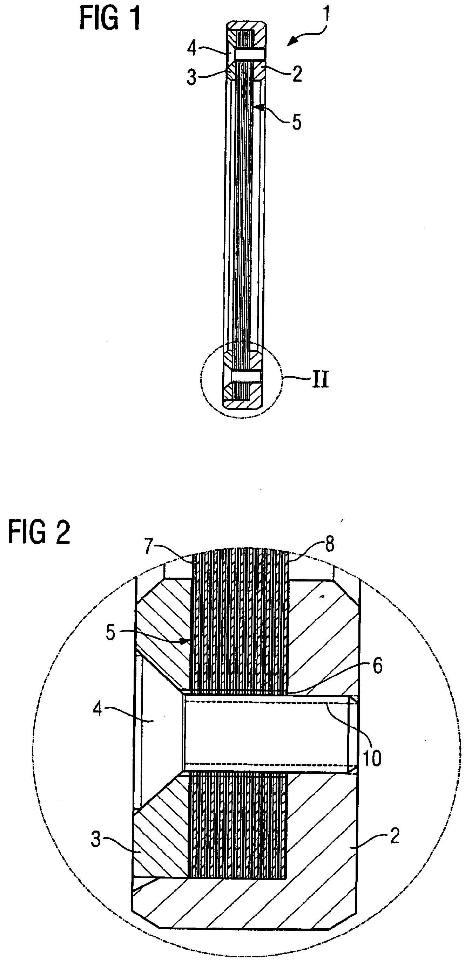

FIG 1 zeigt in einem Längsschnitt eine ringförmige Abdichtungsvorrichtung 1, die eine Schichtung 5 von Kunststofffolien 8 und Kupferscheiben 7 bzw. Kupferfolien in einer vorgebbaren Reihenfolge zeigt. Des Weiteren wird die Schichtung mittels eines Deckels 3 und einer Senkkopfschraube 4 in der Fassung 2 gehalten. Die Fassung 2 weist gemäß FIG 2 ein Gewinde 10 auf, in das die Senkkopfschraube 4 eingedreht wird. Der Schaft der Senkkopfschraube 4 ragt durch vorgesehene axial fluchtende Durchgangslöcher 6 der Kupferscheiben 7 und Kunststofffolien 8.

Durch das Eindrehen der Senkkopfschraube 4 in das Gewinde 10 wird die Schichtung von Kunststofffolien 8 und Kupferscheiben 7 durch den Deckel 3 axial innerhalb der Schichtung 5 zusammengepresst und gehalten.

Die Schichtung 5 ist axial betrachtet beispielsweise folgendermaßen aufgebaut: zunächst bildet eine ringförmige Kupferscheibe 7 oder Kupferfolie einen flächigen Kontakt mit dem Deckel 3 oder der Fassung 2. Axial daran anschließend befinden sich bis zur nächsten Kupferscheibe 7 eine oder mehrere Kunststofffolien 8. Die Kupferscheiben 7 ohne flächigen Kontakt zu Deckel 3 oder Fassung 2 stehen beispielsweise über ihre radialen Ränder mit der Fassung und/oder über den Kontakt mit dem Schraubenschaft in thermisch leitfähigem Kontakt, so dass die Wärme aus der Schichtung 5, die insbesondere durch Reibung von Welle 9 und Kunststofffolien 8 entstanden ist, abgeführt wird.

Um eine gleichmäßige axiale Temperaturverteilung innerhalb der Abdichtungsvorrichtung 1 zu erhalten wird die Schichtung 5 variabel gestaltet, d.h. die Anzahl der Kupferscheiben 7 pro axialer Längeneinheit nimmt zur Mitte hin zu und danach wieder ab.

Das würde bedeuten, dass sich an den axialen Enden der Schichtung 5 beispielsweise nach sieben Kunststofffolien 8 eine weitere Kupferscheibe anschließt während inmitten der Schichtung 5 lediglich eine oder zwei Kunststofffolien 8 von Kupferscheiben 7 umgeben sind.

Die Dicke der Kunststofffolien 8 oder Kupferscheiben 7 liegt dabei zwischen 0,001 und 0,6mm.

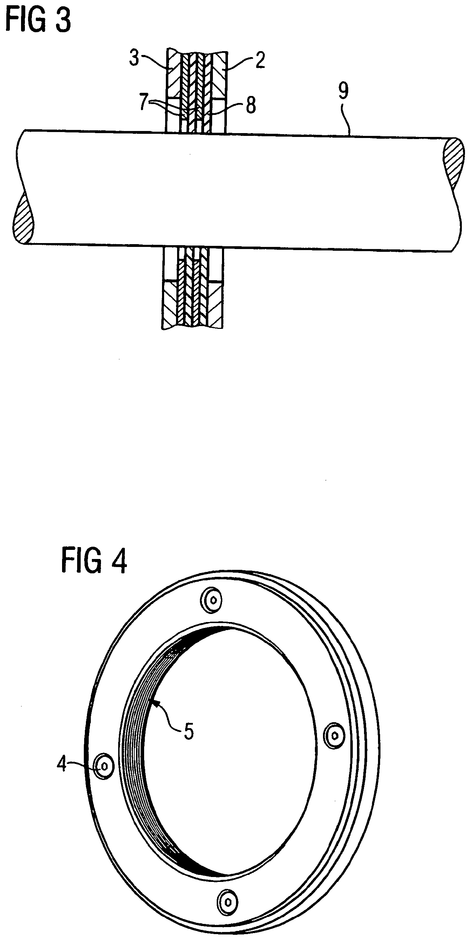

FIG 3 zeigt in prinzipieller Darstellung eine Welle 9, die durch die erfindungsgemäße ringförmige Abdichtungsvorrichtung 1 abgedichtet wird. Dabei wird die Schichtung 5, d.h. eine vorgebbare Abfolge von Kunststofffolien 8 bzw. Kupferscheiben 7 und Kunststofffolien 8 aus hochtemperaturbeständigen und reibungsarmen Kunststofffolien 8 durch die Fassung 2 und den Deckel 3 gehalten. Die Kunststofffolien 8 reichen dabei bis zur Welle 9, wobei die Kupferscheiben 7 radial bezüglich der Welle 9 zurückgesetzt sind und auf jeden Fall keinen direkten Kontakt mit der Welle 9 aufweisen. Ebenso sind Deckel 3 und Fassung 2 radial zurückgesetzt.

Damit wird die Wärme, die bei der Berührung von Kunststofffolien 8 mit der Welle 9 insbesondere bei hohen Drehzahlen ergibt, über die Kupferscheiben 7 beispielsweise an die Fassung 2 abgeführt. Flüssigkeiten und Schmutzpartikel können durch die die Welle 9 berührenden Kunststofffolien 8 bzw. durch den sich einstellenden hydrodynamischen Spalt im Bereich von wenigen Mikrometern sowohl bei sich drehender Welle 9, insbesondere einer Spindel, als auch bei abgeschaltetem Antrieb aus dem Spindelinneren sicher ferngehalten werden.

Somit kann verhindert werden, dass Luft durch die Spindel strömt und die Schmiermittelversorgung der Lager beispielsweise durch Austrocknung beeinträchtigt.

Durch die erfindungsgemäße ringförmige Abdichtungsvorrichtung 1 wird außerdem der Austritt von Schmieröl und dadurch die Verschmutzung von Werkstücken nach dem Stillsetzen der Absaugung oder der Drainage aus der Spindel unterbunden. Dies ermöglicht somit eine sichere Bearbeitung von Kohleelektroden, Hölzern und anderen hochsensiblen Werkstücken aus dem medizinischen und/oder technischen Bereich.

Durch die erfindungsgemäße ringförmige Abdichtung 1 wird der Dichtungsbereich von Spindelsystemen oder anderen Welle-Lager-Systemen axial äußerst kurz ausgeführt. Dadurch werden die dynamischen Eigenschaften (beispielsweise Schwingungsverhalten) von schnelldrehenden Spindeln sowie anderen Welle-Lager-Systemen beispielsweise durch große Lagerabstände nicht beeinträchtigt.

## Patentansprüche

1. Ringförmige Abdichtungsvorrichtung (1) für drehbare Spindeln oder andere Welle-Lager-Systeme, wobei die Abdichtungsvorrichtung (1) eine vorgebbare axiale Schichtung (5) von Kunststofffolien (8) und Metallfolien (7) aufweist, wobei die Kunststofffolien (8) und Metallfolien (7) bezüglich einer Welle (9) radial angeordnet sind, **dadurch gekennzeichnet, daß** die Metallfolien (7) im Bereich der Welle (9) bezüglich der Kunststofffolien (8) radial zurückgesetzt sind und so ein Kammersystem erzeugen und wobei die axiale Schichtung (5) in einer Fassung (2) gehalten ist, wobei die Metallfolien (7) in mit der Fassung (2) und/oder über den Kontakt mit dem Schaft einer Schraube (4) in thermisch leitfähigem Kontakt stehen, die die Schichtung (5) in der Fassung (2) hält.

2. Ringförmige Abdichtungsvorrichtung (1) nach Anspruch 1, **dadurch gekennzeichnet, dass** die Metallfolien (7) als Kupferfolien ausgeführt sind.

3. Ringförmige Abdichtungsvorrichtung nach einem der vorhergehenden Ansprüche, **dadurch gekennzeichnet, dass** die Schichtung (5) innerhalb der Fassung (2) durch einen Deckel (3) und durch am Umfang des Deckels (3) verteilte Schrauben (4) gehalten ist.

4. Ringförmige Abdichtungsvorrichtung (1) nach Anspruch 3, **dadurch gekennzeichnet**, die Schichtung (5) im Bereich der Schrauben (4) Durchgangslöcher (6) aufweist.

5. Ringförmige Abdichtungsvorrichtung (1) nach Anspruch 4, **dadurch gekennzeichnet, dass** die Schrauben (4) als Senkkopfschrauben ausgeführt sind, so dass sich eine reduzierte axiale Ausdehnung der ringförmigen Abdichtungsvorrichtung (1) ergibt.

6. Ringförmige Abdichtungsvorrichtung (1) nach einem der vorhergehenden Ansprüche, **dadurch gekennzeichnet, dass** die Kunststofffolien (8) als hochtemperaturbeständige und reibungsarme Folien ausgeführt sind.

7. Schnelllaufendes Spindelsystem mit einer Abdichtungsvorrichtung (1) nach Anspruch 1, zur Abdichtung zwischen einem Antriebsraum und einem Spindelraum.

## Claims

1. Ring-shaped sealing device (1) for turnable spindles or other shaft-bearing systems, wherein the sealing device (1) has a predefinable axial layering arrangement (5) of plastic foilfoils (8) and metal foils (7), wherein the plastic foils (8) and metal foils (7) are radially disposed in relation to a shaft (9), **characterised in that** the metal foils (7) are radially set back in relation to the plastic foils (8) in the region of the shaft (9) and thus create a chamber system and wherein the axial layering arrangement (5) is retained in a holder (2), wherein the metal foils (7) are in thermally conductive contact with the holder (2) and/or via the contact with the shank of a screw (4), which retains the layering arrangement (5) in the holder (2).

2. Ring-shaped sealing device (1) according to claim 1, **characterised in that** the metal foils (7) are embodied as copper foils.

3. Ring-shaped sealing device (1) according to one of the preceding claims, **characterised in that** the layering arrangement (5) is retained within the holder (2) by a lid (3) and by screws (4) distributed on the perimeter of the lid (3).

4. Ring-shaped sealing device (1) according to claim 3, **characterised in that** the layering arrangement (4) has through holes (6) in the area of the screws (4).

5. Ring-shaped sealing device (1) according to claim 4, **characterised in that** the screws (4) are embodied as countersunk screws, so that a reduced axial extension of the ring-shaped sealing device (1) results.

6. Ring-shaped sealing device (1) according to one of the preceding claims, **characterised in that** the plastic foils (8) are embodied as high-temperature resistant and low-friction foils.

7. High-speed spindle system with a sealing device (1) according to claim 1, for sealing between a drive space and a spindle space.

## Revendications

1. Dispositif (1) annulaire d'étanchéité pour des broches tournantes ou d'autres systèmes arbre-palier, le dispositif (1) d'étanchéité ayant un empilement (5) axial pouvant être donné à l'avance de feuilles (8) en matière plastique et de feuilles (7) métalliques, les feuilles (8) en matière plastique et les feuilles (7) métalliques étant disposées radialement par rapport à un arbre 9), **caractérisé en ce que** les feuilles (7) métalliques sont en retrait radialement dans la région de l'arbre (9) par rapport aux feuilles (8) en matière plastique et produisent ainsi un système de chambre et dans lequel l'empilement (5) axial est maintenu dans une monture (2), les feuilles (7) métalliques étant en contact conducteur de la chaleur avec la monture (2) et/ou par le contact avec le fût d'un boulon (4) qui maintient l'empilement (5) dans la monture (2).

2. Dispositif (1) annulaire d'étanchéité suivant la revendication 1,
**caractérisé en ce que** les feuilles (7) métalliques sont des feuilles de cuivre.

3. Dispositif (1) annulaire d'étanchéité suivant l'une des revendications précédentes,
**caractérisé en ce que** l'empilement (5) est maintenu à l'intérieur de la monture (2) par un couvercle (3) et par des boulons (4) répartis sur le pourtour du couvercle (3).

4. Dispositif (1) annulaire d'étanchéité suivant la revendication 3,
**caractérisé en ce que** l'empilement (5) a des trous (6) traversant dans la région des boulons (4).

5. Dispositif (1) annulaire d'étanchéité suivant la revendication 4,
**caractérisé en ce que** les boulons (4) sont réalisés sous la forme de boulons à tête conique de manière à obtenir une étendue radiale réduite du dispositif (1) annulaire d'étanchéité.

6. Dispositif (1) annulaire d'étanchéité suivant l'une des revendications précédentes,
**caractérisé en ce que** les feuilles (8) en matière plastique sont des feuilles résistant à une température haute et à frottement petit.

7. Système de broches tournant rapidement ayant un dispositif (1) d'étanchéité suivant la revendication 1, pour assurer l'étanchéité entre un espace d'entraînement et un espace de broche.
